Europäisches Patentamt

European Patent Office

Office européen des brevets

(11) Numéro de publication: **0 141 740**
**A2**

## (12) DEMANDE DE BREVET EUROPEEN

(21) Numéro de dépôt: **84402182.4**

(22) Date de dépôt: **30.10.84**

(51) Int. Cl.⁴: **G 01 B 11/24, H 04 N 17/04**

---

(30) Priorité: **04.11.83 FR 8317587**

(43) Date de publication de la demande: **15.05.85**
**Bulletin 85/20**

(84) Etats contractants désignés: **AT DE FR GB IT NL**

(71) Demandeur: **VIDEOCOLOR, 7, boulevard**
**Romain-Rolland, F-92128 Montrouge (FR)**

(72) Inventeur: **Faivre, Michel, THOMSON-CSF SCPI 173, bld**
**Haussmann, F-75379 Paris Cédex 08 (FR)**

(74) Mandataire: **Grynwald, Albert et al, THOMSON-CSF**
**SCPI 173, Bld Haussmann, F-75379 Paris Cedex 08 (FR)**

---

(54) **Procédé de mesure des déformations d'une mire, et appareil mettant en oeuvre le procédé.**

(57) La présente invention concerne un procédé et un appareil pour mesurer les déformations de géometrie d'une mire. Elle trouve application en particulier dans le domaine de la télévision en couleur. L'invention propose de réaliser un balayage le long d'une direction de référence (4 ou 5) dans le plan image (3) fournit par un objectif (2) de la trame affichée par un dispositif à contrôler (1). La mesure des écarts entre la position de points affichés et la position qu'ils occuperaient dans une mire non déformée est mesurée par une barrette linéaire transfert de charge qui est déplacée le long de l'une ou l'autre de ces directions de référence. La succession des mesures de ces points permet de caractériser les qualités du dispositif générant la mire (1).

# PROCEDE DE MESURE DES DEFORMATIONS D'UNE MIRE ET APPAREIL METTANT EN OEUVRE LE PROCEDE.

La présente invention concerne un procédé de mesure des déformations d'une mire et un appareil mettant en oeuvre le procédé. Elle trouve application en particulier dans le domaine de la télévision en couleur.

Dans de nombreux domaines on cherche à connaître la déformation que subit une mire prédéterminée quand on l'affiche sur un dispositif optique, réfléchissant ou transmettant, ou sur un dispositif électro-optique, comme un tube de télévision. Dans ce domaine par exemple, une mesure des déformations de mire vise à résoudre deux problèmes techniques particuliers. Selon le premier, il s'agit de caractériser la qualité d'un produit fabriqué sur une chaîne de production. A cette fin, on prélève un tube d'essai dans un lot de tubes produits. Le tube de télévision est alors muni de son système de déviation, qui est alors connecté à un générateur de mire. Une mire est affichée sur l'écran dont les déformations sont causées par des limites des caractéristiques du produit. Selon un second problème technique, il s'agit de caractériser les performances d'un tube inconnu.

Des solutions ont été proposées dans l'art antérieur afin de réaliser de telles opérations aux fins décrites ci-dessus. Une fois la mire affichée sur l'écran, un dispositif photographique est disposé en relation avec le tube de façon à obtenir une photographie de la mire sur l'écran. Une table de numérisation permettait de comparer les écarts géométriques entre chacune des lignes photographiées et la position théorique que cette même ligne aurait dû occuper si la mire avait été affichée sans défaut. Pour parvenir à des mesures exploitables, la numérisation de ces écarts est réalisée en un certain nombre de points, 17 par exemple, et l'écart est mesuré en longueur par rapport à une direction perpendiculaire à la ligne dont on veut mesurer la déformation.

Selon un tel procédé de mesure, avec un matériel photographique éprouvé, une telle mesure demande de 40 à 60 mn. De plus, les mesures étant réalisées sur des supports photographiques, la répétabilité de la mesure n'est jamais assurée. Il existe aussi un problème de régularité de l'éclairage dans le champ du dispositif photographique. La qualité des tubes de télévision est devenue telle qu'un tel procédé ne permet pas d'obtenir des précisions suffisantes pour qualifier certains défauts de ces tubes.

Selon un autre procédé de l'art antérieur, l'image de l'écran portant la mire est projetée directement sur une table de numérisation. Une telle méthode permet une meilleur répétabilité de la mesure et une amélioration des précisions. Cependant, l'agrandissement de l'image de l'écran reste une technique optique très délicate qui confine cette méthode au laboratoire.

Afin de remédier à ces inconvénients de l'art antérieur, le procédé de l'invention apporte une solution au problème de la mesure des déformations de mire. La mire est constituée de lignes dont la géométrie est prédéterminée et son image est formée par un moyen optique. L'invention réside en ce qu'on mesure, au cours d'un déplacement unique le long d'au moins une direction de référence, les écarts d'un ensemble de points d'au moins une ligne de l'image de la mire aux points correspondants de la mire de géométrie prédéterminée.

La mire peut être produite sur divers systèmes tant optiques qu'électro-optiques. Toute déformation de cette mire fournit une indication sur les caractéristiques, défauts ou qualités, du système.

L'invention se rapporte aussi à un appareil mettant en oeuvre le procédé. Une image de la mire est formée par un objectif. L'invention est caractérisée en ce qu'il comporte aussi dans le plan image de l'objectif, une table portant un chariot mobile sur un rail, le chariot portant une barrette multi-éléments photosensibles, linéaire de direction perpendiculaire à celle du rail. La table est portée sur un support mobile en rotation autour d'un axe de direction perpendiculaire au plan image de l'objectif. D'autres caractéristiques et avantages de la présente invention seront mieux compris à l'aide de la description et des figures annexées qui sont :

- la figure 1 : un schéma général permettant de décrire le procédé selon l'invention,

- la figure 2 : un schéma de mesure de déformations selon l'invention,

- la figure 3 : un schéma de mire habituellement utilisé en télévision,

- la figure 4 : un mode particulier de réalisation adapté à la télévision,

- la figure 5 : un schéma particulier de réalisation pour la télévision en couleurs,

- la figure 6 : un schéma général d'un banc de mesure selon l'invention,

- la figure 7 : un mode de réalisation particulier d'une partie de la figure 6.

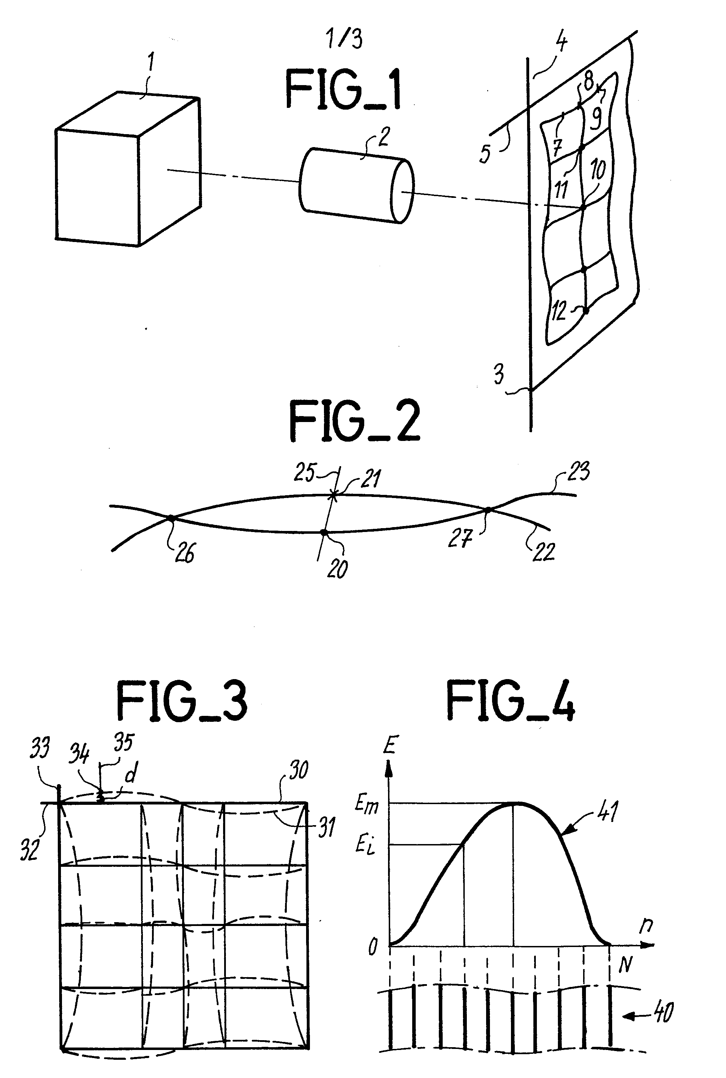

Selon l'invention, il s'agit de caractériser les performances d'un dispositif comme le dispositif 1 de la figure 1, afin de déterminer par exemple la qualité d'un produit dans une chaîne de fabrication. Le dispositif 1 porte une mire qu'il engendre par des moyens particuliers qui lui sont propres. Un moyen optique 2, comme un objectif photographique, fournit une image de la mire dans son plan focal image 3. La mire 6 est, sur le dessin, constituée par un arrangement de lignes dans des directions variées. Le dispositif 1 est commandé d'une manière qui lui est propre de façon à afficher une mire de géométrie prédéterminée. L'image de cette mire 6 dans le plan 3 comporte nécessairement des déformations dont la mesure permet, selon l'invention, de qualifier le dispositif 1. Ces dispositifs peuvent être de divers genres. Ce sont des dispositifs optiques par exemple des systèmes de lentilles ou des surfaces réfléchissantes, ou bien des systèmes électro-optiques comme des écrans de télévision. Il est connu de l'art antérieur de caractériser un dispositif comme le dispositif 1 en mesurant les écarts entre la position de points comme les points 7 - 12 à la position qu'occupe leurs correspondants dans la mire prédéterminée. Autrement dit, il s'agit de mesurer les écarts des positions qu'occupent ces points dans l'image 6 par rapport à une mire prédéterminée qui serait affichée si le dispositif 1 était parfait. L'invention se caractérise principalement en ce qu'on acquiert les données des différents écarts précités au cours d'un unique déplacement le long d'au moins une direction de référence comme les directions 4 et 5 de la figure 1. Dans l'exemple de réalisation de la figure 1, la mire est constituée par deux séries de lignes, la première série de lignes étant dans la direction 5 et la seconde série de lignes selon la direction 4.

A la figure 2 on a représenté un mode de mesure de ces écarts selon l'invention. La position théorique de la ligne de mire est la ligne 22. En fait son image subit une déformation et est représentée par une ligne 23. La mesure de la position du point 20 permet de caractériser la déformation de la mire au niveau de la ligne 22. Cette déformation peut être mesurée par l'écart existant, le long d'une direction 25, entre le point 20 sur la ligne 22 et le point correspondant 21 sur la ligne 22. Sur la figure 2, deux points 26 et 27 sont invariants.

A la figure 3, on a représenté une mire prédéterminée 30 de forme rectangulaire composée d'une première série de lignes horizontales de direction 32 et d'une seconde série de lignes verticales de direction 33. Dans une telle mire, pratiquée notamment pour la mesure des déformations en télévision, une image de la mire est représentée sur le diagramme 31 en traits interrompus. La déformation de la ligne supérieure horizontale 31 par rapport à la ligne correspondante de la mire réelle 30 peut être représentée par une mesure d'un ensemble d'écarts comme l'écart d. L'écart d est mesuré le long d'une direction 35 perpendiculaire à la direction de la ligne considérée et passant par un point 34 dont mesure la position.

Pour une ligne donnée, on peut choisir de mesurer la position de six points par exemple. L'écart de chacun de ces points sera calculé perpendiculairement à la direction de la ligne correspondante dans la mire prédéterminée, que cette ligne soit horizontale 32 ou verticale 33.

5

A la figure 4, on a représenté un moyen de réaliser l'invention particulièrement pour un téléviseur. Les lignes de mire sont constituées par des barres d'une épaisseur donnée. Les positions et les écarts de chaque ligne de la mire sont mesurés classiquement sur le centre de l'épaisseur de la barre. Afin de permettre une mesure rapide et précise de ce centre, on réalise une modulation de faisceau de telle sorte que l'éclairement le long d'une section 40 de l'épaisseur du trait soit une forme gaussienne 41. Selon une caractéristique avantageuse de l'invention, le signal de modulation de faisceau monochrome permettant de produire lesdites barres verticales ou horizontales est produit de façon numérique et se présente sous forme d'une succession d'échelons, dont le nombre peut être de 7 à 15 environ, selon le format du tube cathodique mesuré, la première moitié de ces échelons étant de niveau constamment croissant, et la deuxième moitié de niveau constamment décroissant, de préférence de façon symétrique par rapport à la première moitié, le niveau du palier du premier et dernier échelons étant juste suffisant pour que l'illumination des luminophores correspondants puisse être perçue par le capteur et l'amplitude maximale de ce signal étant telle qu'elle ne provoque pas la saturation dudit capteur, la durée des paliers de ces échelons étant sensiblement identique pour tous les échelons et égale à environ 70 nanosecondes pour les barres verticales et à 64 microsecondes pour les barres horizontales, ces barres ayant alors une largeur d'environ 7 millimètres. Selon la caractéristique essentielle de l'invention, la mesure de la position de chaque point choisi est faite selon une direction particulière. Cette direction comme les directions 25 de la figure 2 ou 35 de la figure 3 est celle d'une barette linéaire placée le long de l'une ou l'autre de ces directions. Cette barrette comporte des éléments photosensible disposés, par exemple dans le plan image 3 de la figure 1, parallèlement à la direction 4 pour mesurer les positions des points 8 - 9. On a ainsi possibilité de mesurer les écarts entre les positions de ces points et de leurs correspondants sur une ligne horizontale. La barrette ne couvre pas l'ensemble du champ de l'image de la mire.

Il faut donc déplacer la barrette le long de la direction de la ligne dont l'on veut mesurer la déformation. Chaque barre ayant pour axe une ligne de mire est donc vue approximativement selon son épaisseur. Selon l'invention chaque zone de la barrette photosensible est éclairée par l'image d'une barre épaisse. Par un algorythme simple et rapide, une valeur de la position du centre $N_0$ de la barre est fournie. Ceci est rendu possible par une commande judicieuse de l'affichage de la mire prédéterminée sur le dispositif 1 que l'on se propose de qualifier, l'éclairement variant selon une distribution gaussienne comme dans la figure 4.

Dans un mode particulier de réalisation qui sera décrit plus en détail plus loin, la barrette photosensible est constituée par une barrette linéaire d'éléments à transfert de charge du type CCD. Une barrette convenable comporte par exemple 1 728 photo-diodes espacées le long de la barrette d'un pas de 10 micros mètres. Un tel composant peut être du type TH 7803.

Pour qualifier un tube de télévision en couleur, on doit distinguer selon qu'il s'agit d'un tube avec ou sans masque d'ombre. Un tube sans masque d'ombre peut être ou bien un tube monochrome donc à un seul canon, ou bien un tube trichrome par exemple à trois canons en ligne dans lequel on a omis de monter le masque au cours de la fabrication dans la chaîne. En effet, pour qualifier un lot issu d'une chaîne de production, par cette méthode, il convient au début de la chaîne de sélectionner un tube de télévision trichrome qui servira de tube d'essai et dont, dans la chaîne, le masque n'est pas placé. Pour les tubes sans masque, un seul canon étant allumé, la probabilité pour que un élément photosensible de la barrette de détection ne soit jamais excitée est quasiment nul. Aussi l'invention s'applique-t-elle directement sans difficulté.

Dans le cas où le tube comporte un masque d'ombre, le problème peut résider en ce que, puisque un seul canon est excité à la fois, le pas des triplets du masque peut produire un phénomène d'obscurcissement de la barrette.

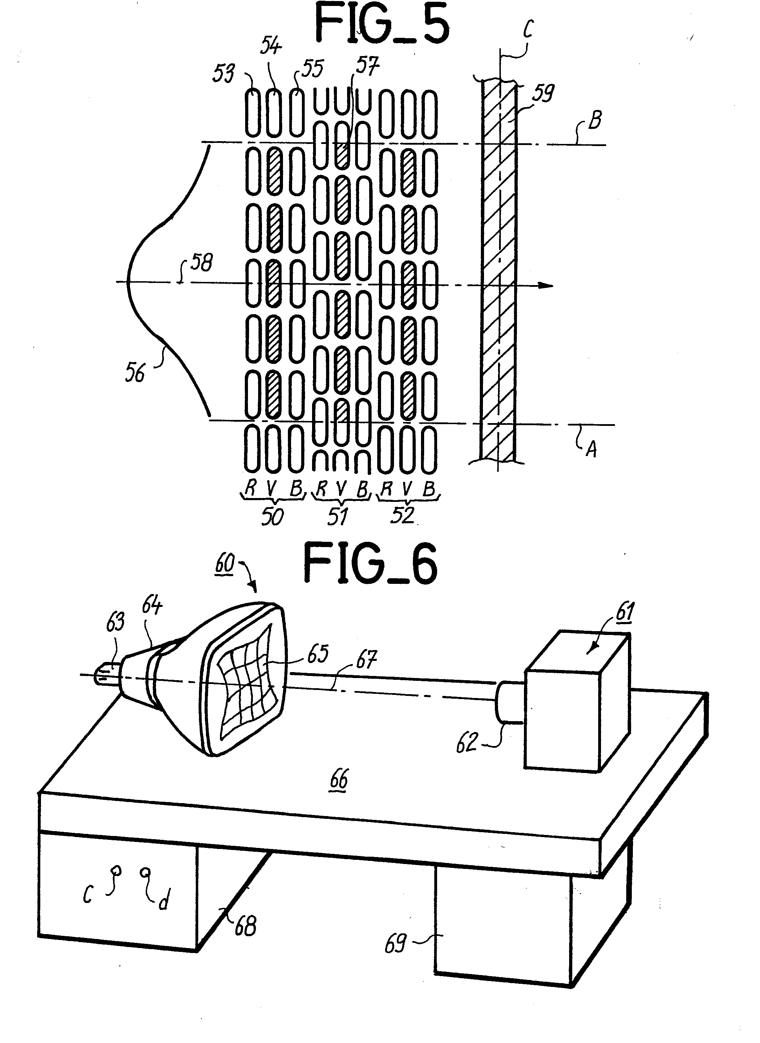

A la figure 5, on a représenté une zone d'un masque excité de telle sorte que l'écran affiche une barre horizontale de mire d'épaisseur comprise entre les axes A et B. Le centre 58 de la barre épaisse est déterminé ainsi qu'il a été décrit plus haut par un algorythme exploitant la distribution gaussienne 56 des éclairements le long d'une section droite de la barre. Or, la bárrette 59 est placée le long de cette section selon la direction C. Comme sa largeur est réduite, il faut éviter qu'elle se trouve en regard de trous non activés du masque.

En effet, le masque comporte des perforations en triplets 50 , 51 , 52. Un triplet est constitué de trois trous 53 , 54 , 55 disposés côte à côte. Comme un seul canon, le canon central vert V est allumé on constate que la distance qui sépare deux colonnes de trous V est égale au pas horizontal du masque. Il peut donc arriver que certaines mesures réalisées sans précautions conduisent à un résultat nul ; On dit qu'il y a obscurcissement de la barrette. Pour s'en affranchir l'invention propose de réaliser un lissage de l'information. Pour cela, le dispositif de service de la barrette est placé en intégration pour une acquisition. Au cours d'un déplacement de la barrette d'une distance au plus égal au pas horizontal du masque, ramené a celui de son image dans le plan focal de l'objectif, on ajoute chacune des données saisies de façon à obtenir tout l'éclairement désiré. La donnée d'intégration est normalisée pour pouvoir être comparée aux données obtenues sans déplacement de la barrette.

En effet, le problème est moins crucial pour une ligne verticale, la séparation de deux trous oblongs dans une colonne R , V ou B étant inférieure à la largeur des photo-élém4ents de la barrette 59.

Un autre phénomène, variable dans le temps, est aussi mesuré selon l'invention. Il s'agit du phénomène de gîte. Selon ce dernier, le produit peut présenter une certaine dérive dans le temps, la mire changeant lentement de position au cours du temps. Par mesures successives de position de points caractéristiques, comme le centre et les sommets de la mire, on peut ainsi caractériser la vitesse et l'amplitude de gîte.

8

A la figure 6, on a représenté un appareil mettant en oeuvre le procédé selon l'invention. Dans un tel appareil monté sur un banc de mesure 66 sont disposés en regard l'un de l'autre un tube de télévision 60 et une caméra 61. Le tube de télévision comporte un ensemble de canons 63 constitués de trois canons rouge, vert, bleu R , V , B et un collier de déviation 64 destiné à réaliser les balayages convenables. Les différentes connexion électriques des dispositifs 63 et 64 sont reliés à un générateur 68 de génération de mire. La mire 65 est affichée sur l'écran du tube 60. Selon l'axe central 67 du faisceau émis par le canon vert on dispose une caméra 61 comportant un objectif 62 dont l'axe optique est aligné sur l'axe 67. La caméra 61 porte d'une part la barrette photosensible et d'autre part les moyens mécaniques permettant les mouvements de celle-ci dans le plan image de l'objectif 62. Elle comporte aussi des circuits d'élaboration de données de positions, des mesures de points désirés qui sont fournis à un ordinateur de mesure 69. Un certain nombre de points sont choisis sur la mire 65 qui comporte cinq lignes horizontales et cinq verticales. Les déformations de ces lignes seront mesurées par la donnée des positions des différents points marqués sur la mire 65.

Le générateur de mire comporte une pluralité de réglage et notamment les réglages suivants. La sélection de programmes d'éclairement permet d'ajuster à la fois la largeur des traits constituant chacune des barres de la mire et d'autre part permet aussi de choisir la distribution d'éclairement le long d'une section droite de chacun de ces traits. On arrive ainsi à ajuster selon les besoins de la mesure en particulier la distribution gaussienne précitée. Selon le type de mesure désiré, on peut aussi sélectionner un certain nombre de mires différentes. Le générateur 68 comporte aussi des ajustages C et D des balayages de lignes et de trames du tube de télévision 60.

L'ordinateur 69 comporte des programmes permettant de fournir des mesures de déformations de géométrie d'une mire. De tels programmes comportent des routines de saisie des données de position, des routines de mesure des écarts des positions de chacun des points à la position qu'occuperait ces points dans la mire prédéterminée, et des routines pour calculer les données de mesure des déformations de mire en télévision par exemple connues sous le nom de déformations de trapèze de débalance ou de coussins.

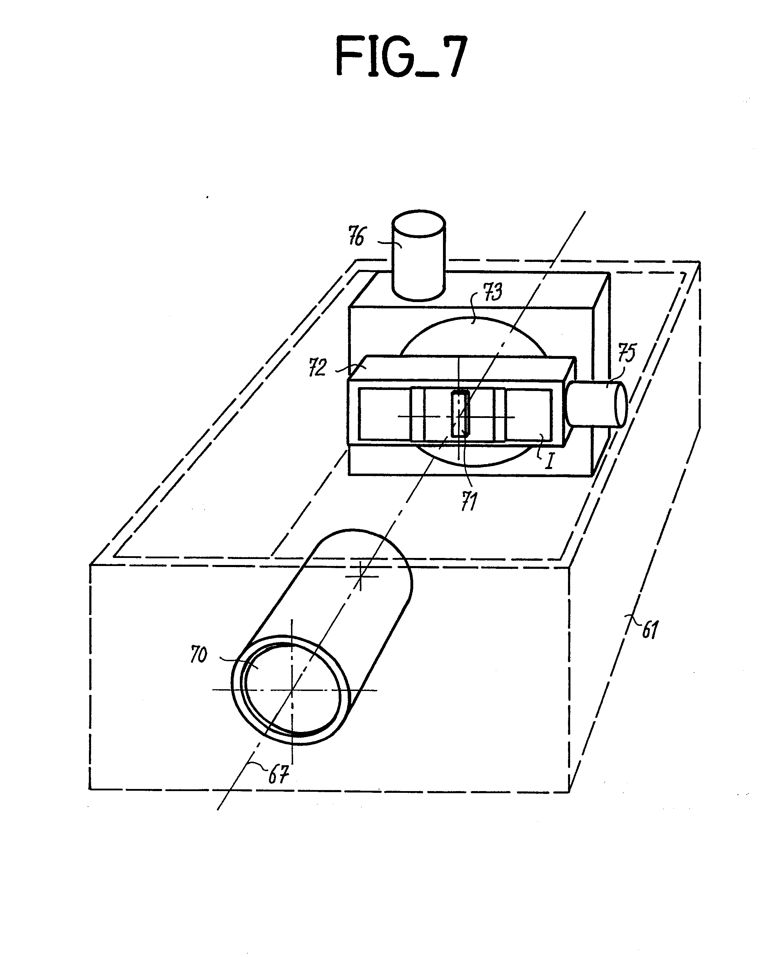

A la figure 7, on a représenté un mode particulier de réalisation d'une caméra 61. L'axe optique 67 de la caméra et celui de l'axe du banc 66. La caméra comporte un objectif 70 qui peut être du type objectif de 50 mm. Le long de l'axe on trouve ensuite dans la caméra le plan image I dans lequel est placé la barrette d'éléments photosensibles 71.

La barrette est montée sur un système de translation 72 mobile dans l'axe perpendiculaire à l'axe de la barrette photosensible. Ce système de translation 72 est lui-même monté sur un ensemble rotatif 73, commandé par un moteur 76, qui peut effectuer une rotation de 90° dans un plan parallèle au plan image I. Les déplacements du système de translation 72 associés mécaniquement à l'ensemble rotatif 73 sont commandés par un moteur 75. Cette disposition permet de réaliser des déplacements rectilignes dans deux axes perpendiculaires.

## REVENDICATIONS

1. Procédé de mesure des déformations d'une mire, la mire étant constituée de barres dont la géométrie est prédéterminée, procédé selon lequel on forme une image optique de la mire et caractérisé en ce qu'on mesure, au cours d'un déplacement unique le long d'au moins une direction de référence (4 , 5), les écarts d'un ensemble de points (7 - 12) d'au moins une ligne de l'image (7 - 9) de la mire (6) aux points correspondants de la mire de géométrie prédéterminée.

2. Procédé selon la revendication 1, la mire (30) prédéterminée étant constituée de lignes rectilignes, caractérisé en ce que chaque direction de référence (32 , 33) est choisie parallèle à un ensemble de lignes de la mire.

3. Procédé selon la revendication 1 ou 2, caractérisé en ce que les écarts (d) sont mesurés perpendiculairement (35) à la direction de référence (32 ou 33).

4. Procédé selon l'une des revendications précédentes, la mire (30) prédéterminée comportant une première série de barres rectilignes horizontales (32) et une seconde série de barres verticales (33) pour son affichage sur un écran de télévision, caractérisé en ce que les écarts (d) sont mesurés perpendiculairement à chaque série de barres et en ce que les écarts sont mesurés au cours de déplacements le long d'une seule direction de référence.

5. Procédé selon la revendication 4, caractérisé en ce que chaque écart est mesuré entre une position moyenne $(N_0)$ du centre de l'image de la barre de la mire et la position de la ligne correspondante dans la mire prédéterminée.

6. Procédé selon la revendication 5, caractérisé en ce que chaque barre de la mire est constituée par l'éclairement de plusieurs éléments de balayage comme des lignes de balayage télévision, la distribution (41) d'éclairement dans une section droite (40) de la barre de mire étant gaussienne.

11

7. Procédé selon la revendication 6, le tube de télévision étant du type à trois canons afin de fournir une image en couleurs, caractérisé en ce qu'un seul canon est allumé pour une mire donnée.

8. Procédé selon la revendication 7, le tube étant à trois canons en ligne avec un masque perforé, caractérisé en ce que seul le canon vert central est actif, la position du centre (58) d'une barre horizontale de mire (53 , 57) étant obtenue par lissage des éclairements le long de la section droite de chaque ligne, afin de s'affranchir des phénomènes d'obscurcissement dûs au pas de perforation du masque.

9. Procédé selon la revendication 1, caractérisé en ce que, afin de mesurer la gîte de la mire produite, la mesure selon l'invention est répétée plusieurs fois, les positions de points caractéristiques étant mémorisée et leurs variations mesurées, dans le temps.

10. Appareil mettant en oeuvre le procédé selon l'une des revendications précédentes, l'image de la mire (65) étant produite par un objectif (70), caractérisé en ce qu'il comporte une barrette (71) multi-éléments photosensibles, linéaire de direction perpendiculaire à la direction de déplacement d'un système (72), lui-même porté sur un ensemble rotatif (73) mobile en rotation autour d'un axe (67) de direction perpendiculaire au plan image de l'objectif (70).

11. Appareil selon la revendication 10, caractérisé en ce que la barrette linéaire (71) est du type à transfert de charge et dont la dimension longitudinale couvre tout le champ image.

12. Appareil selon la revendication 10, la mire étant du type rectangulaire, caractérisé en ce que la mesure des déformations est effectuée d'abord selon une direction parallèle à une première direction de lignes de la mire au cours de l'aller d'un déplacement du chariot puis qu'elle est effectuée après rotation d'un angle de 90 ° le long de la seconde direction de lignes de la mire au cours du retour du déplacement de l'ensemble (72).

13. Appareil selon la revendication 11, caractérisé en ce que la barrette (71) photosensible est montée dans une caméra (61) et en ce

12

que les données issues de la barrette sont transmises à un ordinateur (69) afin d'élaborer, par le moyen de programmes, les différentes caractéristiques de mesure de déformations.

# FIG_1

# FIG_2

# FIG_3

# FIG_4

# FIG_5

R V B, R V B, R V B,
50      51      52

# FIG_6

FIG_7